# EUROPEAN PATENT SPECIFICATION

(11) **EP 3 981 310 B1**
(45) Date of publication and mention of the grant of the patent: **21.08.2024**
(21) Application number: 20200270.5
(22) Date of filing: 06.10.2020
(51) Int. Cl.: A47L 9/28, A47L 9/00

(54) **ELECTRICALLY OPERATED MOBILE VACUUM CLEANER**
ELEKTRISCH BETRIEBENER MOBILER STAUBSAUGER
ASPIRATEUR MOBILE À COMMANDE ÉLECTRIQUE

(43) Date of publication of application: 13.04.2022
(73) Proprietor: Valentini, Guido, 20122 Milano (IT)
(72) Inventor: Valentini, Guido, 20122 Milano (IT)
(74) Representative: Wörz, Volker Alfred

(56) References cited:
- WO-A1-00/38255
- WO-A1-2005/055794
- WO-A1-2018/152840
- US-A- 3 757 194
- US-B1- 6 286 609
- US-B1- 6 495 932

## Description

The present invention refers to an electrically operated mobile vacuum cleaner for separating dust and particles from a suction flow. The vacuum cleaner comprises
an electric motor and a turbine for generating the suction flow,
a vacuum cleaner housing in which the electric motor and a collection chamber for collecting the dust and particles separated from the suction flow are arranged,
at least one battery cell for providing the electric motor with electric energy for its operation, and
a plurality of wheels assigned to the vacuum cleaner, on which the vacuum cleaner can be moved over a ground surface.

Such battery operated vacuum cleaners are known in the prior art. For example, EP 2 628 427 A2 discloses a vacuum cleaner which may be operated by one or more internal batteries. In this connection, "internal" means that the batteries are fixedly located in the vacuum cleaner housing and cannot be removed therefrom without having to open or disassemble the vacuum cleaner housing, for example by means of a tool (e.g. a screwdriver, or the like), and electrically disconnecting the internal batteries from the rest of the electronic circuit of the vacuum cleaner by means of an appropriate tool (e.g. a soldering iron). The internal batteries are recharged from an external mains power supply if an appropriate electric cable of the vacuum cleaner is plugged into the appropriate socket of the mains power supply. This means that the known battery operated vacuum cleaners usually have an electric cable for connecting them to the mains power supply for operation and/or recharging of internal batteries. Furthermore, the known vacuum cleaner is provided with an internal charger for recharging the internal batteries. Similar considerations also apply to the vacuum cleaner known from WO 2012/ 031 925 A1. Another electrically operated mobile vacuum cleaner using a battery pack is disclosed in WO 2005/055794 A1.

Furthermore, a battery operated vacuum cleaner from the so-called Unlimited Series is available from Robert Bosch Hausgeräte GmbH, Munich, Germany. The vacuum cleaner is operated by means of an exchangeable battery pack which is externally attached to the vacuum cleaner housing in a releasable manner. The battery pack is part of a cordless 18-Volt system from Bosch (so-called Click 'n Power) and may also be used for other appliances, e.g. power tools (sanders, circular saws, jigsaws, drills, power screw drivers etc.). The vacuum cleaner housing has external guiding rails onto which the battery pack is slid into a final attachment position, in which it is automatically electrically contacted with the electronics of the vacuum cleaner and releasably secured to the vacuum cleaner housing. However, external attachment of the battery pack to the vacuum cleaner housing has drawbacks in terms of design and handling of the vacuum cleaner. The battery pack has an almost rectangular shape and is perceived more as a foreign body than as an integral part of the vacuum cleaner housing. Further, the battery pack sticks out beyond the housing at least on one side which unnecessarily increases the size of the vacuum cleaner housing.

Summing up, it is an object of the present invention to provide for a battery operated vacuum cleaner that is easy to handle and opens up new possibilities in terms of design, in particular where the battery pack is not perceived as a foreign body of the vacuum cleaner housing.

This object is solved by a vacuum cleaner comprising the features of claim 1. In particular, starting from the vacuum cleaner of the above-mentioned kind, it is suggested that
the at least one battery cell forms an integral part of an extractable battery pack,
the housing comprises a recess with a longitudinal extension, the housing opening towards the environment and the recess adapted for receiving at least part of the battery pack in an insertion direction essentially parallel to the longitudinal extension of the recess,
the battery pack is equipped with at least two separate first electrical contact elements electrically connected to the at least one battery cell, and
the recess is equipped with at least two separate second electrical contact elements electrically connected to the electric motor,
wherein the first and second contact elements are adapted to automatically enter into a mutual electric contact upon insertion of at least part of the battery pack into the recess for establishing an electric connection between the at least one battery cell and the electric motor and for operation of the vacuum cleaner by means of electric energy from the at least one battery cell.

According to the invention, it is suggested that at least part of the battery pack, preferably the entire battery pack, is received in a recess provided in the vacuum cleaner housing and accessible from the outside of the vacuum cleaner. The battery pack has an external housing provided with electrical contact elements for contacting respective contacts of the vacuum cleaner. Preferably, the recess has a dimension and form in order to receive at least a front part of the battery pack housing, the front part of the housing comprising a front end face and circumferential wall portions, the circumferential wall portions bordering and surrounding the front end face. Hence, the recess may encompass the received part of the battery pack housing (the front end face and respective wall portions of the battery pack housing extending essentially parallel to the insertion direction and the longitudinal extension of the recess) from all sides. The electrical contact elements are preferably located at the inserted part of the battery pack housing.

Alternatively, it is suggested that the recess has a dimension and form in order to receive the entire battery pack housing. With the battery pack fully inserted into the recess only a rear end face of the battery pack housing is visible from outside. Hence, after complete insertion of the battery pack into the recess, only the rear end face of the battery pack is visible from outside. It is suggested that the end face is formed such that it continuously transitions into the vacuum cleaner housing surrounding the opening of the recess. Alternatively, after insertion of the battery pack the recess may also be closed by means of a cover or lid element, which continuously transitions into the vacuum cleaner housing surrounding the opening of the recess.

This has the advantage, that the electrical contact elements of the battery pack and the recess are located inside the vacuum cleaner housing covered and protected by the battery pack or part of it inserted into the recess or alternatively by the cover or lid element. Dust, particles and humidity from the environment are kept away from the electrical contact elements. This provides for a safe and reliable electrical contact between the battery pack and the recess, each time a battery pack is inserted into the recess. Further, mechanical damaging of the electric contact elements is reliably prevented. Furthermore, the vacuum cleaner according to the invention opens new possibilities in terms of design, because only a small part of the inserted battery pack is visible from the outside of the vacuum cleaner. There are no or only small extraneous elements protruding from the vacuum cleaner housing.

The first electrical contact elements of the battery pack may be arranged at a front end face of the battery pack, opposite to the externally visible rear end face. In this case, the second electrical contact elements are provided at a respective bottom surface of the recess in order to allow to automatically establish the electric connection of the battery cells in the battery pack with the electric motor of the vacuum cleaner upon full insertion of the battery pack or part of it into the recess. The electric connection may be established directly to the electric motor or indirectly, e.g. through an electronic control unit of the vacuum cleaner.

Alternatively, the first electrical contact elements could be provided at the side of the battery pack extending laterally along one or more of the external wall portions of the battery pack. The second electrical contact elements would be provided at corresponding internal wall portions of the recess in order to allow to automatically establish the electric connection of the batteries in the battery pack with the electric motor of the vacuum cleaner upon insertion of the battery pack or part of it into the recess. In that case, the first electrical contact elements and/or the second electrical contact elements may have a longitudinal extension preferably extending along the longitudinal extension of the recess once the battery pack is inserted into the recess. This embodiment has the advantage that each time the battery pack is removed from the recess or inserted therein, the first and second electrical contact elements are cleaned by friction when the first and second electrical contact elements slide along each other, thereby preventing corrosion and/or staining of the contact elements.

The vacuum cleaner may be provided with an internal electric charger for automatically recharging the battery cells of the battery pack when the battery pack or part of it is fully inserted into the recess. The charger may be provided with electric power through an electric cable of the vacuum cleaner which is plugged into a respective socket of a mains power supply. Different charging modes are conceivable. In a first mode, the electric energy for operating the electric motor is provided by the battery pack inserted into the recess and at the same time the battery cells are recharged by the charger. In a second mode, the electric energy for operating the electric motor is provided by the mains power supply through the electric cable of the vacuum cleaner at the same time and the battery cells are recharged by the charger. In a third mode, no electric energy is provided to the electric motor of the vacuum cleaner, i.e. the vacuum cleaner is not running, and the battery cells are recharged by the charger. However, it is preferred that the vacuum cleaner does not have an internal charger. Instead, the battery cells of the battery pack are recharged by means of an external charger once removed from the recess and connected to the external charger. This allows provision of a smaller and lighter vacuum cleaner.

The vacuum cleaner is a mobile vacuum cleaner provided with wheels on which the vacuum cleaner can be easily moved over the ground, i.e. a floor of a building, floor panels of a scaffold or the like. The wheels may be directly attached to the vacuum cleaner housing. At least one of the wheels (with a total of three wheels) or two of the wheels (with a total of four wheels) may be rotatable about an essentially vertical axis in order to allow easy manoeuvring of the vacuum cleaner on the ground, e.g. following a user's path during the intended use of the vacuum cleaner. Alternatively, the vacuum cleaner (with or without wheels) may be mounted on a trolley or the like which is provided with wheels on which the trolley can be easily moved over the ground together with the vacuum cleaner mounted thereon. The battery operation of a vacuum cleaner is in particular advantageous for mobile vacuum cleaners which can be moved over the ground on wheels during their intended use.

Preferably, the vacuum cleaner comprises
- a vacuum generation device with at least one electric motor and at least one turbine,
- the dust collection chamber located in the vacuum cleaner housing,
- an air inlet port for dust laden air of the suction flow, the air inlet port located downstream of the vacuum generation device and connecting the inside of the dust collection chamber with the environment,
- an air outlet port for filtered air located upstream of the vacuum generation device and connecting an exhaust opening of the vacuum generation device with the environment,
- a filter element located between the dust collection chamber and a suction opening of the vacuum generation device, and
- a pneumatic tube or hose attached to the air inlet port.

The air inlet port can be connected to an air outlet port of a hand-guided power tool, in particular a polisher or a sander, by means of the pneumatic tube or hose. Due to the suction flow, the vacuum cleaner actively draws dust-laden air generated by the power tool during its intended use through the pneumatic tube or hose into the dust collection chamber. The dust-laden air is filtered by the filter element and the filtered air is subsequently discarded into the environment through the air outlet port of the dust extraction system. Dust and small particles contained in the dust-laden air are withheld by the filter element and collected in the dust collection chamber.

Regarding the vacuum generating components, for example, the vacuum cleaner according to the invention may have the general design of the vacuum cleaners S 130L, S 145L, S 230L, S 245L offered by RUPES S.p.A., Vermezzo (MI), Italy. Instead of or additionally to operation by means of electric energy provided by a mains power supply, the vacuum cleaner according to the invention is battery operated by means of a battery pack which may be inserted into a recess provided in the vacuum cleaner housing.

The vacuum cleaner may additionally be provided with one or more additional internal batteries. These batteries form an integral part of the vacuum cleaner, preferably mechanically fixed inside the vacuum cleaner and firmly electrically connected to the other electronic components of the vacuum cleaner, e.g. by means of soldering or a plug-and-socket connection. Extracting the at least one internal battery from the vacuum cleaner cannot be easily accomplished and requires disassembling at least part of the vacuum cleaner housing. Preferably, the at least one internal battery can only be removed from the vacuum cleaner housing by a trained specialist.

According to a preferred embodiment of the present invention, it is suggested that
the vacuum cleaner comprises an adapter element having an adapter housing at least part of which designed in a manner as to be adapted to be inserted into the recess after removal of the battery pack,
the adapter housing being equipped with at least two separate third electrical contact elements electrically connected to a cable and a plug adapted for connection to a mains power supply,
wherein the third and second contact elements are adapted to automatically enter into a mutual electric contact upon insertion of the adapter element or part of it into the recess for establishing an electric connection between the mains power supply and the electric motor and for operation of the vacuum cleaner by means of electric energy from the mains power supply, if the plug is connected to the mains power supply.

Of course, the electric connection between the mains power supply and the electric motor may be established indirectly. Besides the electronic control unit, which may be located between the second contact elements and the electric motor of the vacuum cleaner, the adapter element or a power supply unit provided therein or attached thereto, may first transform the mains power into an operating power of the vacuum cleaner and the electric motor, respectively. Hence, operation of the vacuum cleaner by means of the mains power does not necessarily mean that the vacuum cleaner is operated with 110 V or 230 V AC, respectively, but also comprises the case where the mains power is first transformed into an operation power for the vacuum cleaner, e.g. with 12 V, 18 V, 24 V, 36 V or 48 V DC.

The use of the adapter element allows operation of the vacuum cleaner by means of electric power from a mains power supply when the battery pack is not inserted into the recess. This may be advantageous, if the vacuum cleaner has to be continuously operated for a long period of time and/or if a high suction power is required which may possibly not be achieved by the battery pack. The adapter element is provided with an electric cable which may be plugged into a respective socket of the mains power supply. Hence, the electric cable is present in the vacuum cleaner only when the vacuum cleaner is ready for operation by mains of power from a mains power supply. When the vacuum cleaner is battery operated by means of the battery pack, there is no electric cable which would disturb and require additional storage space.

The same applies to an electrical transformer and/or an electric rectifier and/or further electronic components (e.g. filter elements), which are present in the vacuum cleaner only if the adapter element is inserted into the recess and the vacuum cleaner is ready for operation with the electric power from the mains power supply. These electronic components are preferably located in the adapter element or in an external power supply unit possibly attached thereto. Hence, when operated by means of electric energy from the battery pack, the vacuum cleaner has no excessive size or weight due to these electronic components which are not needed during battery operation of the vacuum cleaner.

The adapter element may also have the functionality of a charger for the at least one internal battery of the vacuum cleaner. Hence, when the adapter element is plugged into a mains power supply, not only can the vacuum cleaner be operated with the electric power from the mains power supply but also can the at least one internal battery be charged. This has the advantage that the vacuum cleaner does not have to be equipped with an internal battery charger for the at least one internal battery. Rather, the battery charger forming part of the adapter element is present in the vacuum cleaner only if the adapter element is inserted into the recess and the vacuum cleaner is ready for operation with the electric power from the mains power supply.

It is suggested that at least part of the adapter housing, preferably the entire adapter housing, is received in the recess provided in the vacuum cleaner housing and accessible from the outside of the vacuum cleaner. Preferably, the recess has a dimension and form in order to receive at least a front part of the adapter housing, the front part comprising a front end face and circumferential wall portions of the adapter housing, the circumferential wall portions bordering and surrounding the front end face. Hence, the recess is designed to encompass the received part of the adapter element (i.e. a front end face and respective side wall portions extending essentially parallel to the insertion direction and the longitudinal extension of the recess) from all sides.

Alternatively, it is suggested that the recess has a dimension and form in order to receive the entire adapter housing (or the adapter housing has a dimension and form in order to be able to be inserted in its entirety into the recess), leaving only a rear end face of the adapter housing visible from outside. Hence, after complete insertion of the adapter element into the recess, only the rear end face of the adapter housing (and the electric cable for connection of the adapter element to an external power supply unit or a mains power supply) is visible from outside. It is suggested that the end face is formed such that it continuously transitions into the vacuum cleaner housing surrounding the opening of the recess.

The third electrical contact elements of the adapter element may be arranged at a front end face of the adapter housing, opposite to the externally visible rear end face. In this case, the second electrical contact elements are provided at a respective bottom surface of the recess in order to allow to automatically establish the electric connection of the mains power supply and the adapter element, respectively, with the electric motor of the vacuum cleaner upon full insertion of the adapter housing or part of it into the recess. The electric connection may be established directly to the electric motor or indirectly, e.g. through an electronic control unit of the vacuum cleaner.

Alternatively, the third electrical contact elements could be provided at side walls of the adapter housing and could extend laterally along one or more of the side walls. In that case, at least one of the second or third electrical contact elements may have a longitudinal extension preferably extending along the longitudinal extension of the recess and parallel to the insertion direction of the adapter element into the recess. Further, the second electrical contact elements would be provided at a corresponding internal side wall of the recess in order to allow to automatically establish the electric connection of the mains power supply and the adapter element, respectively, with the electric motor of the vacuum cleaner upon insertion of the adapter element or part of it into the recess. This embodiment has the advantage that each time the adapter element is removed from the recess or inserted therein, the third and second electrical contact elements are cleaned by friction when the contact elements slide on each other during insertion of the adapter element, thereby preventing corrosion and/or staining of the contact elements.

It is suggested that the adapter element is connected to an external power supply unit by means of a first electric cable and the power supply unit is connected to the plug by means of a second electric cable, wherein the power supply unit comprises an electric transformer for transforming the electric energy from the mains power supply into electric energy corresponding to the electric energy supplied by the battery pack, in order to allow operation of the vacuum cleaner by means of electric energy originating from the mains power supply and transformed by the electric transformer of the power supply unit. According to this embodiment, at least some of the electronic components needed only for operation of the vacuum cleaner by means of the mains power supply, for example, an electrical transformer, an electric rectifier and/or further electronic components, like filter elements, are located in the external power supply unit. This applies in particular for the rather heavy and bulky electrical transformer. The other electronic components could just as well be accommodated in the adapter housing if desired. This embodiment has the advantage that the vacuum cleaner with the adapter element is not excessively heavy as would be the case if it also comprised the electric transformer. Furthermore, the external power supply unit has the advantage that in particular the heat generating transformer is located outside of the adapter housing and the vacuum cleaner housing, respectively, and that sufficient cooling can be easily provided for the transformer. The same applies for other electronic components which generate heat during operation. If desired, the external power supply unit could also be attached to the vacuum cleaner housing, in order to facilitate handling and manoeuvring of the mobile vacuum cleaner.

The first electric cable is preferably a low-voltage (e.g. 12 V to 48 V) high-current (e.g. 10 A to 20 A) cable. Therefore, it is suggested that each of the electric lines of the cable has a cross-sectional surface of at least 2 mm² (diameter appr. 1.5 mm), in particular more than 2,5 mm² (diameter appr. 1.8 mm). Preferably, the first electric cable is fixedly attached to the adapter element. Of course, it could also be attached to the adapter element by means of a respective electric socket provided in the adapter housing. Further, it is suggested that the external power supply unit comprises a first electric socket for releasable attachment of the first cable to the power supply unit. Of course, the first cable could also be fixedly attached to the power supply unit. Similarly, it is suggested that the external power supply unit comprises a second electric socket for releasable attachment of the second cable to the power supply unit. Of course, the second cable could also be fixedly attached to the power supply unit. The second cable is preferably a high-voltage (e.g. 110 V to 230 V) low-current (e.g. 1 A to 4 A) cable. Therefore, a smaller cross-sectional surface than for the first cable would be sufficient.

Alternatively, it is suggested that the adapter element comprises an electric transformer arranged inside the adapter housing, wherein the electric transformer is adapted to transform the electric energy form the mains power supply into electric energy corresponding to the electric energy supplied by the battery pack, in order to allow operation of the vacuum cleaner by means of electric energy originating from the mains power supply and transformed by the electric transformer of the adapter element. This has the advantage that the vacuum cleaner (including the adapter element inserted into the recess) when operated by the mains power supply is a single component which can be easily handled. In particular, no external power supply unit has to be dragged behind when moving the vacuum cleaner around in a three-dimensional space or on the ground. Preferably, all electronic components necessary for transforming the mains power into the electric power supplied by the battery pack, including transforming, rectifying and filtering of the mains power, are accommodated in the adapter housing. The vacuum cleaner can be easily switch to battery operation simply by releasing and extracting the adapter element from the recess and replacing it by a battery pack, which is inserted into the recess.

It is suggested that the electric transformer provided in the adapter element or the external power supply unit is adapted to transform a voltage of between 100V and 240 V AC alternating with a frequency between 50 Hz and 60 Hz, of the mains power supply into an operating voltage of 12 V, 18 V, 24 V, 36 V or 48 V, preferably DC, for the vacuum cleaner. Preferably, the electric transformer transforms the mains power to a voltage and current provided by the battery pack, which may be inserted into the recess instead of the adapter element. To this end the adapter element and/or the external power supply unit may comprise an electric transformer (analogue or digital), a rectifier (analogue or digital), preferably a semi-conductor rectifier (comprising e.g. semi-conductor diodes, active electronic components, thyristors, and/or transistors (e.g. MOSFETs)), a filter element or circuits for improving electromagnetic compatibility (EMC) and a closed loop control for maintaining the operating voltage and/or current constant at a given value even under high operational loads.

It is suggested that the electric transformer in the adapter element or in the external power supply unit is adapted to comply with the ATEX 95 equipment directive 94/9/EC. Hence, the adapter element may be used and operated in potentially explosive atmospheres, for example in rooms with dust-laden air and fine particles floating in the air. The directive 94/9/EC of the European Parliament and the Council of 23 March 1994 refers to the approximation of the laws of the Member States of the European Union concerning equipment and protective systems intended for use in potentially explosive atmospheres. For example, this directive stipulates that the electric transformer must not cause any sparks during its operation. With other words, the adapter element or the external power supply unit comprises a so-called safety isolating transformer adapted for use in potentially explosive atmospheres.

According to another preferred embodiment of the invention, it is suggested that the vacuum cleaner housing and the battery pack are provided with corresponding attachment members adapted to enter into mutual engagement with each other upon complete insertion of at least part of the battery pack into the recess and to provide for a releasable attachment of the battery pack in the recess. Similarly, it is suggested that the vacuum cleaner housing and the adapter housing are provided with corresponding attachment members adapted to enter into mutual engagement with each other upon complete insertion of at least part of the adapter element into the recess and to provide for a releasable attachment of the adapter element in the recess.

The attachment members can be of a mechanical type or of a magnetic type. Mechanical attachment members may be part of a bayonet-locking connection, a snap-lock connection, a click-on connection, a clip connection, a frictionally held connection or the like. Magnetic attachment members may comprise one or more magnetic elements, including permanent magnets and/or ferromagnetic elements on each of the components to be secured to each other. By means of the attachment members, the battery pack and the adapter element are prevented from unintentionally disconnecting and falling out of the recess. The electric connection of the battery pack and the adapter element to the electric motor of the vacuum cleaner as well as the mechanical attachment to the vacuum cleaner housing is safely and reliably maintained even under rough operating conditions.

Preferably, the attachment members are adapted to automatically enter into mutual engagement with each other upon complete insertion of at least part of the battery pack or the adapter element into the recess.

Finally, it is suggested that the at least one battery cell of the battery pack is a Lithium (Li)-polymer battery cell. Compared to conventional Li-ion batteries, a Li-polymer battery has the advantage that it will not heat up as much, cannot catch fire and has an increased overall operational safety. Preferably, one or more battery cells are accommodated and electrically switched in the battery pack in series and/or in parallel such that the battery pack provides an output voltage of 12 V, 18 V, 24 V, 36 V, or 48 V and an output current value of something between 10 A to 15 A.

Further features and advantages of the present invention will be described in further detail hereinafter with reference to the accompanying drawings. Each of the features shown in the drawings and described herein, can be combined with any other feature even if such a combination is not shown in the drawings and/or not explicitly described herein. The drawings show:
- Figure 1: an electrically operated mobile vacuum cleaner according to a preferred embodiment of the present invention;
- Figure 2: a schematic view of an upper part of the mobile vacuum cleaner of Fig. 1 in a first embodiment;
- Figure 3: a schematic view of an upper part of the mobile vacuum cleaner of Fig. 1 in a first embodiment;
- Figure 4: a schematic view of an upper part of the mobile vacuum cleaner of Fig. 1 in a first embodiment;
- Figure 5: a sectional and schematic view of an extractable battery pack of the mobile vacuum cleaner of Fig. 1 in a preferred embodiment;
- Figure 6: a sectional and schematic view of a recess in a housing of the mobile vacuum cleaner of Fig. 1 for receiving a battery pack, in a preferred embodiment; and
- Figure 7: a sectional and schematic view of an adapter element of the mobile vacuum cleaner of Fig. 1 in a preferred embodiment.

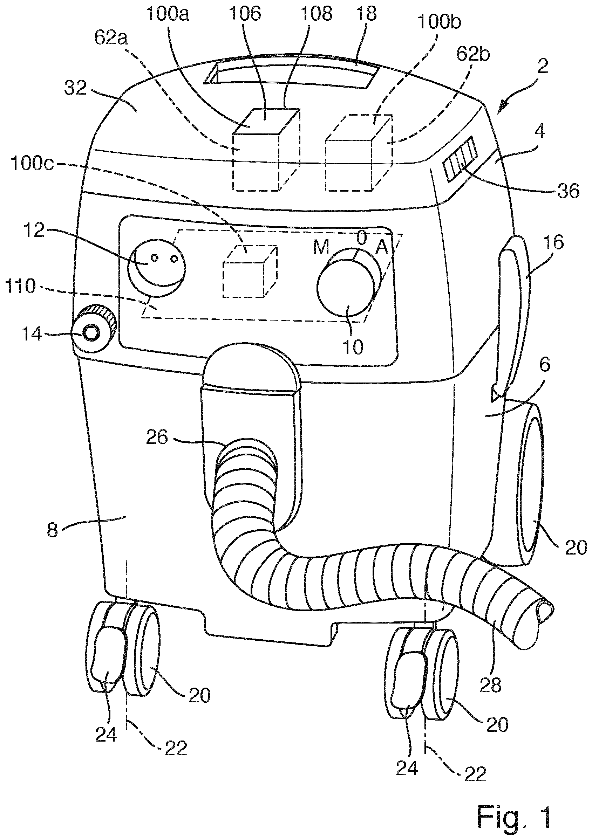

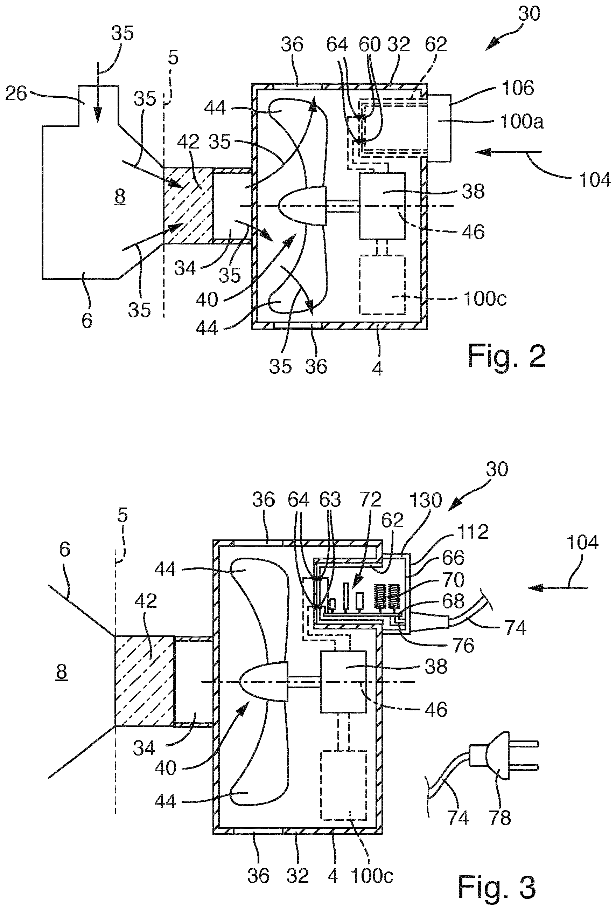

Fig. 1 shows an example of a mobile vacuum cleaner 2 according to the present invention. The vacuum cleaner 2 comprises an essentially two-part housing or casing with an upper part 4 and a lower part 6. The lower part 6 of the casing comprises a dust collection chamber 8 for receiving and storing dust and other small particles which have been filtered out of and extracted from a suction flow of dust-laden air aspirated by the vacuum cleaner 2. The upper part 4 of the casing comprises among others at least one electric motor 38 and at least one turbine 40 (see Figs. 2 to 4) for creating a low pressure or vacuum (i.e. a pressure below the ambient pressure) in the container 8 and for creating the suction flow for the aspiration of dust-laden air. Furthermore, the upper part 4 of the casing comprises one or more air filter elements 42 (see Figs. 2 to 4) for filtering dust and small particles out of the aspirated dust laden air. On the outside of the upper part 4 of the casing, a user interface 10 is provided for the operational control of the vacuum cleaner 2 and its motor(s) 38. In the shown embodiment, the user interface 10 comprises a control switch for turning on ("A" or "M") and off ("0") the vacuum cleaner 2, for switching between automatic ("A") and manual ("M") operational mode and/or possibly also for manual speed control of the motor(s) 38. The vacuum cleaner 2 and its motor(s) 38 are operated by means of electric power from one or more battery packs 100, which are preferably rechargeable and will be described in more detail below.

The upper part 4 of the casing is releasably attached to the bottom part 6 by means of latches 16 located at opposite lateral sides of the casing 4, 6. Of course, the upper part 4 could also be attached to the bottom part 6 in any other way. Figs. 2 to 4 show a dashed line as the separation between the upper part 4 and the bottom part 6 of the casing.

The upper part 4 of the casing may be provided with a handle 18 for conveniently carrying the vacuum cleaner 2 to its designated site of operation. The handle 18 also serves for lifting off the upper part 4 of the casing from the bottom part 6, when the latches 16 are released. The bottom part 6 of the casing is provided with wheels 20 so the vacuum cleaner 2 can be conveniently rolled over a ground surface, in particular a floor of a room or floor panels, from one position to another. Preferably, the front wheels 20 are pivotable about an essentially vertical pivoting axis 22, in order to allow easy manoeuvring of the vacuum cleaner 2. At least one of the wheels 20 preferably comprises a locking brake 24 for temporarily holding the vacuum cleaner 2 in its current position on the ground surface. Hence, the vacuum cleaner 2 is a mobile unit which can be easily moved to a desired site of operation. Alternatively, the vacuum cleaner 2 (with or without wheels 20) could also be positioned on a cart, carriage or trolley provided with wheels and manoeuvred over a base surface.

Although, the vacuum cleaner 2 of Fig. 1 has four wheels 20, the mobile vacuum cleaner 2 according to the invention could have any number of wheels 20 larger than two. In particular, the vacuum cleaner 2 can have two, three or four wheels 20. If the vacuum cleaner 2 had only two wheels 20, these would preferably be arranged along a common horizontal axis of rotation. None of the wheels 20 would have to be pivotable about a vertical axis 22. If the vacuum cleaner 2 had three wheels 20, two of them would preferably be arranged along a common horizontal axis of rotation. A third wheel 20, located in a distance to the rotational axis of the other two wheels, would preferably be pivotable about a vertical axis 22. Obviously, the same would also apply to the wheels of a cart, carriage or trolley on which a stationary or mobile vacuum cleaner 2 could be mounted.

The vacuum cleaner 2 comprises a vacuum generation device 30 (see Figs. 2 to 4) including the one or more motors 38 and the one or more turbines 40 and preferably located entirely in the upper part 4 of the casing. The dust collection chamber 8 has an air inlet port 26 for the dust-laden air of the suction flow 35 (see Fig. 2). The air inlet port 26 is located downstream of the vacuum generation device 30 and connects the inside of the dust collection chamber 8 with the environment. Further, the vacuum cleaner 2 comprises an exhaust opening 36 for filtered air located upstream of the vacuum generation device 30 and opening into the environment. The filter element(s) 42 are located between the dust collection chamber 8 and a suction opening 34 (see Figs. 2 to 4) of the vacuum generation device 30. Preferably, the filter element(s) 42 are located entirely in the upper part 4 of the casing. The filter element(s) 42 can be realized as plate-type or ring-type filter(s). They can be removed from the upper part 4 of the casing for cleaning or replacement purposes, preferably after detaching the upper part 4 of the casing from the bottom part 6.

Furthermore, the vacuum cleaner 2 comprises a pneumatic tube or hose 28 with sockets at its distal ends. One of the sockets is adapted for releasable connection of the pneumatic tube or hose 28 to the air inlet port 26. Another socket at the opposite end of the pneumatic tube or hose 28 may be connected to an air outlet port of any kind of a vacuum utilization device. The sockets of the pneumatic tube or hose 28 may be attached to the air inlet port 26 of the vacuum cleaner 2 and/or to the air outlet port of the vacuum utilisation device and secured thereto mechanically (e.g. a bayonet connection, a click-on connection, frictional connection or the like) and/or by means of magnetic force (e.g. generated by interaction between magnetic elements, in particular permanent magnets and/or ferromagnetic elements). The vacuum utilization device may be realized, for instance, as a suction nozzle, a floor nozzle, a suction brush, or a hand-held power tool (e.g. a sanding or a polishing machine, an electric drill, an electric chisel, an electric saw or the like). Hence, the vacuum cleaner 2 may aspirate dust-laden air generated during the intended use of the power tool and may filter out and extract dust and small particles from the dust-laden air by means of the filter element(s) 42 and collect them in the dust collection chamber 8.

The upper part 4 of the casing may have a power socket 12 for receiving an electric plug of a power supply line of an electric hand-held power tool, which is pneumatically connected to the vacuum cleaner 2 by means of the pneumatic tube or hose 28. The power socket 12 is preferably in connection with the battery cells of the one or more battery packs 100 for operating the vacuum cleaner 2 and its motor(s) 38. The power tool draws its electric current for operation of its electric motor from the socket 12. The vacuum cleaner 2 may have a sensing element (e.g. a current sensor) for sensing when the power tool is activated and draws current from the socket 12 and - in particular if the vacuum cleaner 2 is operated in the automatic ("A") operational mode - a switching element (e.g. an electrically controlled switch, in particular a semiconductor switch) for automatically turning on the vacuum cleaner 2 and its motor(s) 38, respectively, when current is drawn through the power socket 12, and turning off the vacuum cleaner 2 and its motor(s) 38, respectively, possibly after a delay, when no current is drawn.

Alternatively, the hand-held power tool and its motor are operated by means of electric power from one or more rechargeable battery cells. The battery cells may be internal battery cells located inside the power tool housing or may make part of one or more extractable battery packs which are releasably attached to the power tool housing. In the case of a battery operated power tool, there is no electric connection by means of a power supply line between the vacuum cleaner 2 and the power tool. In order to provide for an automatic activation and deactivation of the vacuum cleaner 2 and its motor(s) 38 when the battery operated power tool is activated a wireless data communication connection (e.g. Bluetooth, Wi-Fi, NFC, wireless USB, ZigBee or the like) between the power tool and the vacuum cleaner 2 may be established through which a respective power-on signal and/or power-off signal may be transmitted from the power tool to the vacuum cleaner 2. To this end, the vacuum cleaner 2 would be equipped with respective wireless communication means (not shown) comprising a receiver for receiving data from the power tool and possibly also a transmitter for transmitting data to the power tool across the wireless connection.

The upper part 4 of the casing may also have an air socket 14 for connecting a pneumatic high-pressure tube of a pneumatic hand-held power tool to the vacuum cleaner 2. The air socket 14 is preferably in connection with an external compressed air supply and provides compressed air for operating the power tool and its pneumatic motor. The power tool draws compressed air for operation of its pneumatic motor from the air socket 14. The vacuum cleaner 2 has a sensing element (e.g. an airflow sensor) for sensing when the power tool draws compressed air from the socket 14 and a switching element for automatically turning on the vacuum cleaner 2 and its motor, respectively, when compressed air is drawn, and turning off the vacuum cleaner 2 and its motor, respectively, possibly after a delay, when no compressed air is drawn.

As previously mentioned, the vacuum cleaner 2 is operated by electric energy from one or more battery packs 100. Each of the battery packs 100 may comprise one or more battery cells which are electrically connected to each other in series and/or in parallel so that the respective battery pack 100 provides a desired voltage and current. The battery packs 100a, 100b are releasably attached to the vacuum cleaner housing 4, 6. Additionally, the vacuum cleaner 2 may also comprise one or more internal batteries, like battery 100c, comprising one or more battery cells. The internal battery 100c is located inside the vacuum cleaner housing 4, 6 and can be removed therefrom only after opening, disassembling or destroying the housing 4, 6. Additional steps (e.g. releasing soldered connections by means of a soldering iron, releasing a plug or the like) are most likely required for detaching the battery 100c from an electronic circuit of the vacuum cleaner 2.

Hereinafter, some preferred embodiments of the vacuum generation device 30 are explained in further detail with reference to Figs. 2 to 4. The vacuum generation device 30 comprises an electric motor 38 and a turbine 40 with radially extending blades 44. A motor shaft and the turbine 40 may rotate about a rotational axis 46. The turbine 40 may realize an axial air flow (extending essentially parallel to the rotational axis 46) or - as shown in the Figs. 2 to 4 - a radial air flow (extending essentially obliquely, in particular perpendicular in respect to the rotational axis 46). The vacuum generation device 30 is operated by electric energy from one or more battery packs 100 comprising at least one extractable battery pack 100a; 100b. The extractable battery packs will be described hereinafter in more detail with reference to battery pack 100a. However, the respective description applies to other extractable battery packs, like battery pack 100b, just as well.

In the embodiment of Fig. 2, the vacuum generation device 30 is operated by electric energy from the at least one extractable battery pack 100a. One or more additional internal batteries 100c may also be provided.

The battery pack 100a comprises an external casing 114 and one or more battery cells 116 located therein, preferably of the Lithium-Polymer-type. However, the battery cells 116 may also be of any other type, e.g. of the Lithium-lon-type. The battery cells 116 of the battery pack 100a are electrically switched in series and/or in parallel, in order to make the battery pack 100a provide a desired operating voltage in the range of 12 V to 48 V for the vacuum generation device 30 and a respective operating current for operating the vacuum cleaner 2 and its motor(s) 38. The electric connections for switching together the battery cells 116 are not shown in the figures but can be easily imagined by the skilled person.

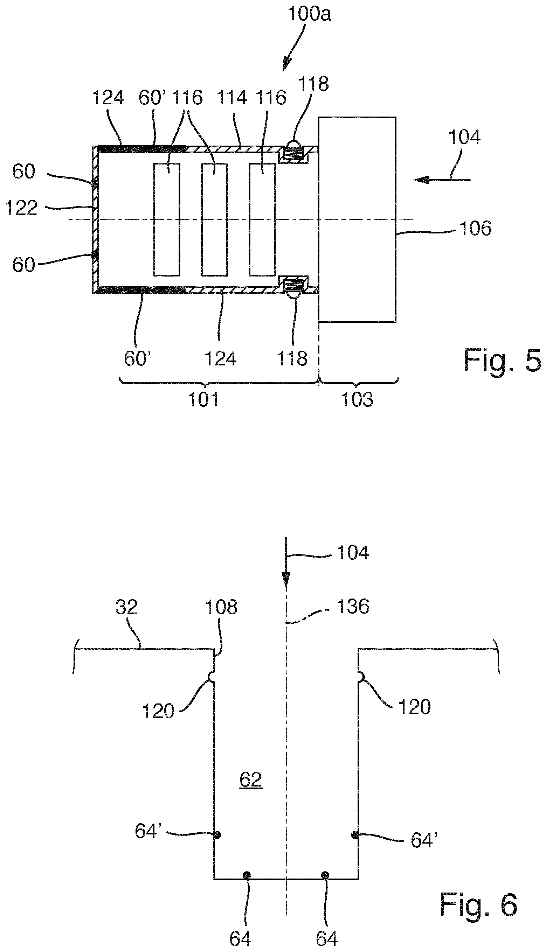

The vacuum cleaner 2 comprises an externally accessible recess or compartment 62 for receiving at least a front part 101 of the battery pack 100a (see Fig. 5). In particular, a housing 32 of the upper part 4 of the vacuum cleaner casing comprises the recess 62. The housing 32 makes part of or corresponds to the upper part 4 of the vacuum cleaner casing. The battery pack 100a is releasably attached to the housing 32 in order to avoid its unintentional separation and falling out of the recess 62. Attachment and/or securing of the battery pack 100a may be achieved mechanically (e.g. a bayonet connection, a click-on connection, frictional connection or the like) and/or by means of magnetic force (e.g. generated by interaction between magnetic elements, in particular permanent magnets and/or ferromagnetic elements).

In the embodiment of Fig. 5, spring-loaded locking elements 118 are provided on opposite sides of the battery pack 100a. The locking elements 118 may be pressed radially inwards (obliquely, in particular perpendicular in respect to a longitudinal extension of the battery pack 100a) against a spring force. The recess 62 may have corresponding depressions 120 adapted for receiving protruding parts of the locking elements 118, when the battery pack 100a is fully inserted into the recess 62. The protruding parts of the locking elements 118 entering into mutual engagement with the depressions 120 secures the battery pack 100a in the recess 62. Of course, there are many other ways of realizing the securing of the battery pack 100a in the recess 62. For example, the battery pack 100a on the one hand and the recess 62 or a part of the housing 32 surrounding an opening 108 of the recess 62 (see Fig. 6) on the other hand could be provided with respective interacting magnetic elements for securing the battery pack 100a in the recess 62.

According to the invention, it is suggested that at least a part 101 of the battery pack 100a (see Figs. 2 and 5), preferably the entire battery pack 100a (see Fig. 1), is received in the recess or compartment 62 provided in the vacuum cleaner housing 32. Preferably, the recess 62 has a dimension and form in order to receive at least a front part 101 of the battery pack 100a, the front part 101 comprising a front end face 122 and circumferential wall portions 124 of the battery pack 100a, the circumferential wall portions 124 bordering and surrounding the front end face 122 and extending essentially parallel to a longitudinal extension and an insertion direction 104 of the battery pack 100a. Hence, as shown in Fig. 2, the recess 62 may encompass the received part 101 of the battery pack 100a laterally. Alternatively, as shown in Fig. 1, the recess 62 may have a dimension and form such that the entire battery pack 100a is received, leaving only a rear end face 106 of the battery pack 100a visible from outside. Hence, after complete insertion of the battery pack 100a into the recess 62, only the rear end face 106 of the battery pack 100a is visible from outside. It is suggested that the end face 106 is formed such that it continuously transitions into the vacuum cleaner housing 32 surrounding the opening 108 of the recess 62.

First electrical contact elements 60 of the battery pack 100a may be arranged at the front end face 122 of the battery pack 100a, opposite to the externally visible rear end face 106. In this case, second electrical contact elements 64 are provided at a respective bottom surface of the recess 62 (opposite to the opening 108) in order to allow to automatically establish the electric connection of the battery cells 116 in the battery pack 100a with the electric motor 38 of the vacuum cleaner 2 upon full insertion of the battery pack 100a or part 101 of it into the recess 62. The electric connection may be established directly to the electric motor 38 or indirectly, e.g. through an electronic control unit 110 of the vacuum cleaner 2 (see Fig. 1). The electronic control unit 110 preferably comprises a PCB and electric and electronic components arranged and contacted thereon. In particular, the electronic components comprise a data processor adapted for running a computer program thereon. The data processor executing the computer program may realize one or more operations and control functionalities of the vacuum cleaner 2.

Additionally or alternatively, the first electrical contact elements 60' could be provided laterally at the side of the battery pack 100a and extend along one or more of the walls portions 124 of the casing 114 of the battery pack 100a. In that case, the first electrical contact elements 60' may have a longitudinal extension preferably extending along the longitudinal extension of the battery pack 100a and parallel to the insertion direction 104 of the battery pack 100a into the recess 62. In that case, the second electrical contact elements 64' would be provided at one or more corresponding lateral internal walls of the recess 62 in order to allow to automatically establish the electric connection of the battery cells 116 in the battery pack 100a with the electric motor 38 of the vacuum cleaner 2 upon insertion of the battery pack 100a or part 101 of it into the recess 62. This embodiment has the advantage that each time the battery pack 100a is removed from the recess 62 or inserted therein, the first and second electrical contact elements 60', 64' are cleaned by friction of one contact element 60'; 64' sliding on the other contact element 64'; 60', thereby removing humidity, corrosion and/or staining from the contact elements 60', 64'.

The vacuum cleaner 2 may be provided with an internal electric charger (not shown) for automatically recharging the battery cells 116 of one or more of the battery packs 100 of the vacuum cleaner 2. In particular, the battery pack 100a could be recharged by the internal charger when the battery pack 100a or part 101 of it is fully inserted into the recess 62. The charger could be provided with electric energy through an electric cable of the vacuum cleaner 2 which is plugged into a respective socket of a mains power supply. The charger could also be operated by a battery separate from the battery packs 100. Different charging modes are conceivable. In a first mode, the electric energy for operating the electric motor 38 is provided by the battery pack 100a inserted into the recess 62 and at the same time the battery cells 116 of the battery pack 100a are recharged by the charger. In a second mode, the electric energy for operating the electric motor 38 is provided through the electric cable of the vacuum cleaner 2 from the mains power supply and at the same time the battery cells 116 are recharged by the charger. In a third mode, no electric energy is provided to the electric motor 38 of the vacuum cleaner 2, i.e. the vacuum cleaner 2 is not running and in an idle state, and the battery cells 116 are recharged by the charger. An internal charger would be particularly advantageous for recharging battery cells 116 of an internal battery, like battery 100c, which cannot be easily removed from the housing 32.

Alternatively, the vacuum cleaner 2 does not have an internal electric charger. Instead, the battery cells 116 of the battery pack 100a are recharged by means of an external charger to which the battery pack 100a is connected after extraction from the recess 62. Omission of an internal charger allows provision of a smaller and lighter vacuum cleaner 2.

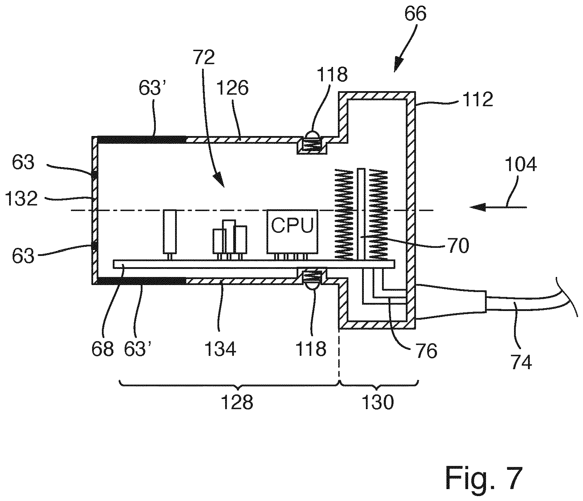

In the embodiment of Fig. 3, the battery pack 100a has been released from the housing 32 and extracted from the recess 62. Instead of the battery pack 100a at least a front part 128 of an adapter element 66 has been inserted into the recess 62. The adapter element 66 is provided with at least two third electronic contact elements 63 which are in electric connection with the second electronic contact elements 64 provided in the recess 62. The adapter element 66 is releasably attached to the housing 32 in order to avoid its unintentional separation and falling out of the recess 62. Attachment and/or securing of the adapter element 66 may be achieved mechanically (e.g. a bayonet connection, a click-on connection, a frictional connection or the like) and/or by means of magnetic force (e.g. generated by interaction between magnetic elements, in particular permanent magnets and/or ferromagnetic elements). For example, the adapter element 66 could be provided with spring-loaded locking elements 118 (see Fig. 7), similar to what was previously described in respect to the battery pack 100a of Fig. 5.

The adapter element 66 has an external casing 126 possibly corresponding in dimension and form to the external casing 114 of the battery pack 100a. In particular, at least that part 128 of the adapter element 66 to be inserted into the recess 62 corresponds to that part 101 of the battery pack 100a to be inserted into the recess 62. The form and/or dimensions of that part 130 of the adapter element 66 not to be inserted into the recess 62 may differ from the form and/or dimensions of that part 103 of the battery pack 100a not to be inserted into the recess 62.

The use of the adapter element 66 allows operation of the vacuum cleaner 2 by means of electric power from a mains power supply. This may be advantageous, if the vacuum cleaner 2 has to be continuously operated for a long period of time and/or if a high suction power is required which may possibly not be achieved by the external battery pack 100a and/or the internal battery 100c. Furthermore, the adapter element 66 may be adapted to charge the internal battery 100c after insertion of the adapter element 66 into the recess 62. Charging of the internal battery 100c may be initiated automatically after insertion of the adapter element 66 into the recess 62 or upon a user request, e.g. after pressing a respective button, transmitting a respective signal to the vacuum cleaner 2, or the like. During operation of the vacuum cleaner 2 and its motor(s) 38, respectively, by means of electric power from the adapter element 66 and a mains power supply, respectively, charging of the internal battery 100c may be interrupted or continued.

In the embodiments of Figs. 3 and 5 the adapter element 66 comprises an electric transformer 70 arranged inside the adapter housing 126. The electric transformer 70 is adapted to transform a voltage in the range of 100 V to 240 V AC from the mains power supply, alternating with a frequency of 50 Hz to 60 Hz into an operation voltage of the vacuum generation device 30 in the range of 12 V to 48 V, preferably DC. The electric energy supplied by the adapter element 66 essentially corresponds to the electric energy supplied by the battery pack 100a, in order to allow operation of the vacuum cleaner 2 and the vacuum generation device 30, respectively, by means of electric energy originating from the mains power supply and transformed by the electric transformer 70 of the adapter element 66. The integration of the transformer 70 into the adapter housing 126 has the advantage that the vacuum cleaner 2 (including the adapter element 66 inserted into the recess 62) operated by the mains power supply is a single component which can be easily handled. In particular, no external power supply unit has to be dragged behind when moving the vacuum cleaner 2 around on the ground.

Preferably, the adapter element 66 comprises a printed circuit board (PCB) 68 provided in the external casing 126. Attached and electrically connected to the PCB 68 is the transformer 70. Further electric and/or electronic components 72 may be attached to the PCB 68 comprising, for example, a rectifier, a central processing unit, a controller or regulator, and one or more capacitors, coils, inductances, resistors, transistors, thyristors, electric filters or the like. Preferably, all electronic components 70, 72 necessary for transforming the mains power into the electric power supplied by the battery pack 100a, including transforming, rectifying and filtering of the mains power, are accommodated in the adapter housing 126.

The electric energy of the mains power supply is transmitted to the transformer 70 of the adapter element 66 by means of a power cable 74 fixedly attached to the external casing 126 of the adapter element 66. Separate wires 76 of the cable 74 are connected to the PCB 68. The power cable 74 is provided with a plug 78 at its distal end for connection to a mains power supply socket. This embodiment has the advantage that the vacuum generation device 30 can be operated for an almost infinite amount of time. During operation of the vacuum generation device 30 with the adapter element 66 the extractable battery pack 100a may be recharged in an external charging station (not shown). As previously mentioned, an internal battery 100c of the vacuum cleaner 2 may be charged during operation of the vacuum generation device 30 with the adapter element 66 through the mains power supply.

If the adapter element 66 is removed from the recess 62 and instead the battery pack 100a is inserted therein again and the vacuum cleaner 2 is operated by means of electric energy provided by the battery pack 100a, the vacuum cleaner 2 no longer has an electric cable 74 which has to be stowed away, and which may be in the way when operating the vacuum cleaner 2 with electrical energy originating from the battery pack 100a. The electric cable 74 is present only if the vacuum cleaner 2 is actually operated with electric energy from the mains power supply by means of the adapter element 66. The same applies to the electrical transformer 70 and/or an electric rectifier and/or further electronic components (e.g. filter elements) 72, which are present in the vacuum cleaner 2 only if the adapter element 66 is inserted into the recess 62 and the vacuum cleaner 2 is actually operated with the electric energy from the mains power supply. Hence, when operated by means of electric energy from the battery pack 100a, the vacuum cleaner 2 has no excessive size or weight due to these electronic components 70, 72 which are not needed during battery operation of the vacuum cleaner 2.

It is suggested that at least part 128 of the adapter housing 126, preferably the entire adapter housing 126, is received in the recess 62 provided in the vacuum cleaner housing 32. Preferably, the recess 62 has a dimension and form in order to receive at least a front part 128 of the adapter housing 126, the front part 128 comprising a front end face 132 and circumferential wall portions 134 of the adapter housing 126, the circumferential wall portions 134 bordering and surrounding the front end face 132 and extending essentially parallel to the insertion direction 104 and the longitudinal extension of the adapter housing 126. Hence, the recess 62 may encompass the received part 128 of the adapter housing 126 laterally.

Alternatively, it is suggested that the recess 62 has a dimension and form in order to receive the entire housing of the adapter element 66, leaving only a rear end face 112 of the adapter housing 126 visible from outside. Hence, after complete insertion of the adapter element 66 into the recess 62, only the rear end face 112 of the adapter housing 126 (and the electric cable 74 for connection of the adapter element 66 to the mains power supply) is visible from outside. It is suggested that the end face 112 is formed such that it continuously transitions into the vacuum cleaner housing 32 surrounding the opening 108 of the recess 62.

The third electrical contact elements 63 of the adapter element 66 may be arranged at the front end face 132 of the adapter housing 126, opposite to the externally visible rear end face 112. In this case, the second electrical contact elements 64 are provided at a respective bottom surface of the recess 62 in order to allow to automatically establish the electric connection of the mains power supply and the adapter element 66, respectively, with the electric motor 38 of the vacuum cleaner 2 upon full insertion of the adapter housing 126 or part 128 of it into the recess 62. The electric connection may be established directly to the electric motor 38 or indirectly, e.g. through the electronic control unit 110 of the vacuum cleaner 2 (see Fig. 1).

Alternatively, the third electrical contact elements 63' could be provided laterally at the side of the adapter housing 126 extending along one or more of the external wall portions 134 of the adapter housing 126. In that case, the third electrical contact elements 63' may have a longitudinal extension preferably extending parallel to the insertion direction 104 and along the longitudinal extension of the adapter element 66. Further, the respective second electrical contact elements 64' would be provided at a corresponding internal wall of the recess 62 in order to allow to automatically establish the electric connection of the mains power supply and the adapter element 66, respectively, with the electric motor 38 of the vacuum cleaner 2 upon full insertion of the adapter housing 126 or part 128 of it into the recess 62. This embodiment has the advantage that each time the adapter element 66 is removed from the recess 62 or inserted therein, the third and second electrical contact elements 63', 64' are cleaned by friction of one contact element 63'; 64' sliding on the other contact element 64'; 63', thereby removing humidity, corrosion and/or staining from the contact elements 63', 64'.

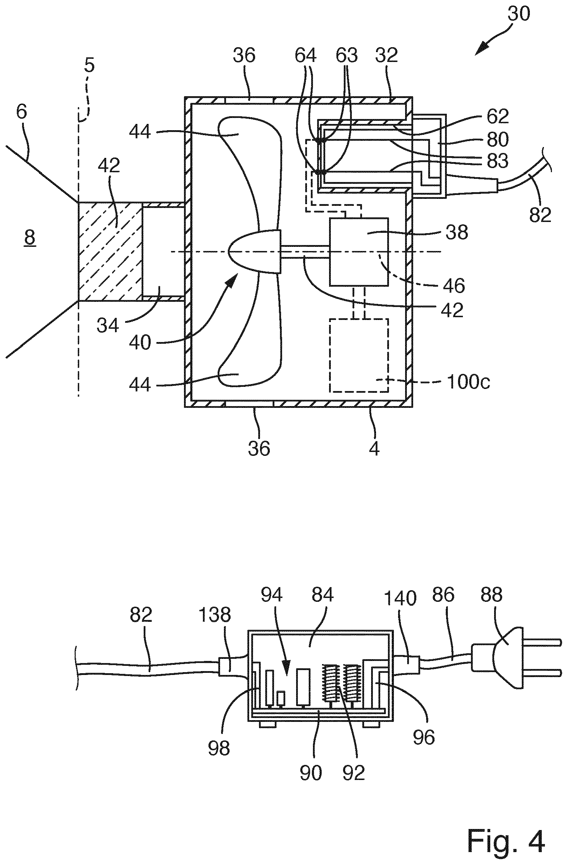

In the embodiment of Fig. 4, the battery pack 100a has been released from the housing 32 and extracted from the recess 62. Instead of the battery pack 100a an adapter element 80 has been at least partially inserted into the recess 62 and its third electrical contact elements 63 are in electric contact with the second electrical contact elements 64 provided in the recess 62. The adapter element 80 is releasably attached to the housing 32 in order to avoid its unintentional separation and falling out of the recess 62. Attachment and/or securing of the adapter element 80 may be achieved mechanically (e.g. a bayonet connection, a click-on connection, frictional connection or the like) and/or by means of magnetic force (e.g. generated by interaction between magnetic elements, in particular permanent magnets and/or ferromagnetic elements), similar to what was previously described regarding the battery pack 100a and the adapter element 66.

The adapter element 80 has an external casing possibly corresponding in dimension and form to the external casing 114 of the battery pack 100a. In particular, at least that part of the adapter element 80 to be inserted into the recess 62 corresponds to that part 101 of the battery pack 100a to be inserted into the recess 62. The form and/or dimensions of that part of the adapter element 80 not to be inserted into the recess 62 may differ from the form and/or dimensions of that part 103 of the battery pack 100a not to be inserted into the recess 62.

The adapter element 80 is provided with a first cable 82 connected to an external power supply unit 84. Preferably, the power supply unit 84 comprises a first electric socket 138 for releasable attachment of the first cable 82 to the power supply unit 84. The external power supply unit 84 is provided with a second cable 86 and a power plug 88 at its distal end for connection of the external power supply unit 84 to a power socket (not shown) of a mains power supply. Preferably, the external power supply unit 84 comprises a second electric socket 140 for releasable attachment of the second cable 86 to the power supply unit 84.

In this embodiment, the adapter element 80 merely serves as an interface between the power supply unit 84 and the electric contacts 64 of the recess 62. To this end, separate wires 83 of the first cable 82 are connected to the electric contacts 63 of the adapter element 80 adapted for entering into electric contact with the electric contacts 64 of the recess 62 upon complete insertion of the adapter element 80 or part of it into the recess 62.

Preferably, the power supply unit 84 has an external casing and comprises a printed circuit board (PCB) 90 housed by the casing. Attached and electrically connected to the PCB 90 is a transformer 92 for transforming a voltage in the range of 100 V to 240 V AC from the mains power supply alternating with a frequency of 50 Hz to 60 Hz, into an operation voltage of the vacuum generation device 30 in the range of 12 V to 48 V, preferably DC. Further electric and/or electronic components 94 may be attached to the PCB 90 comprising, for example, a rectifier, a central processing unit, a controller or regulator, and one or more capacitors, coils, inductances, resistors, transistors, thyristors. Some of the further components 94 could also be housed by the external casing of the adapter element 80. Separate wires 96 of the second cable 86 are connected to the PCB 90. These wires 96 convey the electric energy from the mains power supply to the transformer 92 and preferably comprise three wires 96, for example, one for the phase conductor (with black or brown isolation), one for the neutral conductor (with blue or grey isolation) and one for the protective conductor (with green/yellow isolation). Further, separate wires 98 of the first cable 82 are connected to the PCB 90. These wires 98 convey the electric energy for the operation of the vacuum generation device 30, which was previously transformed by the transformer 92, to the adapter element 80. They preferably comprise two wires 98, for example, one for the positive voltage (with red isolation) and one for the negative voltage (with black isolation).

The compartment or recess 62 in the housing 32 as well as the battery pack 100a, 100b and the adapter element 66; 80 may have any desired cross sectional form, including circular, oval and polygonal, in particular triangular, rectangular, square, pentagonal, hexagonal, etc. Corners formed by abutting side wall portions 114, 126 of the compartment or recess 62, of the battery pack 100a, 100b and/or of the adapter element 66; 80, the corners extending essentially parallel to the insertion direction 104 and the longitudinal extension may be rounded off. Furthermore, the form and dimension of the recess 62 on the one hand and the battery pack 100a, 100b and the adapter element 66; 80 on the other hand does not have to be identical. Their dimensions and forms should simply be adapted to each other in order to allow a guided insertion of the battery pack 100a, 100b and of the adapter element 66; 80 into the recess 62, to allow establishment of an electric contact between the second electric contacts 64 on the one hand and the first electric contacts 60 or the third electric contacts 63 on the other hand, and to allow releasable attachment of the battery pack 100a, 100b or of the adapter element 66; 80 to the housing 32 of the vacuum cleaner 2.

## Claims

1. Electrically operated mobile vacuum cleaner (2) for separating dust and particles from a suction flow (35), the vacuum cleaner (2) comprising
an electric motor (38) and a turbine (40) for generating the suction flow (35),
a vacuum cleaner housing (4, 6; 32) in which the electric motor (38) and a collection chamber (8) for collecting the dust and particles separated from the suction flow (35) are arranged,
at least one battery cell (116) for providing the electric motor (38) with electric energy for its operation,
a plurality of wheels (20) assigned to the vacuum cleaner (2), on which the vacuum cleaner (2) can be moved over a ground surface,
wherein the at least one battery cell (116) forms an integral part of an extractable battery pack (100a, 100b),
the vacuum cleaner housing (4, 6; 32) comprises a recess (62) with a longitudinal extension (136), the recess (62) opening towards the environment and adapted for receiving at least part (101) of the battery pack (100a, 100b) in a direction (104) parallel to the longitudinal extension (136),
the battery pack (100a, 100b) is equipped with at least two separate first electrical contact elements (60; 60') electrically connected to the at least one battery cell (116), and
the recess (62) is equipped with at least two separate second electrical contact elements (64; 64') electrically connected to the electric motor (38),
the first and second contact elements (60, 64; 60, 64') are adapted to automatically enter into a mutual electric contact upon insertion of at least part (101) of the battery pack (100a, 100b) into the recess (62) for establishing an electric connection between the at least one battery cell (116) and the electric motor (38) and operation of the vacuum cleaner (2) by means of electric energy from the at least one battery cell (116), and
the vacuum cleaner housing (4, 6; 32) comprises an upper part (4) comprising at least the electric motor (38) and the turbine (40) and a lower part (6) comprising the dust collection chamber (8),
**characterized in that**
the recess (62) is provided in a housing (32) of the upper part (4) of the vacuum cleaner housing, and the upper part (4) is releasably attached to the bottom part (6).

2. Electrically operated mobile vacuum cleaner (2) according to claim 1, wherein
the vacuum cleaner (2) comprises an adapter element (66; 80) having an adapter housing (126) at least part (128) of which designed such that it can be inserted into the recess (62) after removal of the battery pack (100a, 100b),
the adapter housing (126) being equipped with at least two separate third electrical contact elements (63; 63') electrically connected to a cable (74; 82) and a plug (78; 88) adapted for connection to a mains power supply,
wherein the third and second contact elements (63, 64; 63', 64') are adapted to automatically enter into a mutual electric contact upon insertion of at least part (128) of the adapter housing (126) into the recess (62) for establishing an electric connection between the mains power supply and the electric motor (38) and operation of the vacuum cleaner (2) by means of electric energy from the mains power supply, if the plug (78; 88) is connected to the mains power supply.

3. Electrically operated mobile vacuum cleaner (2) according to claim 2, wherein
the adapter element (80) is connected to an external power supply unit (84) by means of a first electric cable (82) and the power supply unit (84) is connected to the plug (88) by means of a second electric cable (86),
wherein the power supply unit (84) comprises an electric transformer (92) for transforming the electric energy from the mains power supply into electric energy corresponding to the electric energy supplied by the battery pack (100a, 100b), in order to allow operation of the vacuum cleaner (2) by means of electric energy originating from the mains power supply and transformed by the electric transformer (92) of the power supply unit (84).

4. Electrically operated mobile vacuum cleaner (2) according to claim 2, wherein
the adapter element (66) comprises an electric transformer (70) arranged inside the adapter housing (126),
the electric transformer (70) is adapted to transform the electric energy form the mains power supply into electric energy corresponding to the electric energy supplied by the battery pack (100a, 100b), in order to allow operation of the vacuum cleaner (2) by means of electric energy originating from the mains power supply and transformed by the electric transformer (70) of the adapter element (66).

5. Electrically operated mobile vacuum cleaner (2) according to claim 3 or 4, wherein
the electric transformer (70; 92) is adapted to transform a voltage of 230 V or 110 V AC of the mains power supply alternating at 50 Hz to 60Hz into an operating voltage of 12 V, 18 V, 24 V, 36 V or 48 V DC, respectively, for the vacuum cleaner (2).

6. Electrically operated mobile vacuum cleaner (2) according to one of the claims 2 to 5, wherein
the power supply unit (84) and/or the adapter element (66) comprise a rectifier (72; 94) for transforming an alternating current of the mains power supply into a direct current for the vacuum cleaner (2), and/or
the power supply unit (84) and/or the adapter element (66) comprise an electronic filter element (72; 94) for reducing interferences and suppressing electronic disturbances in the operating voltage of the vacuum cleaner (2).

7. Electrically operated mobile vacuum cleaner (2) according to one of the preceding claims, wherein
the vacuum cleaner housing (4, 6; 32) on the one hand and the battery pack (100a, 100b) or the adapter housing (126) of the adapter element (66; 80) on the other hand are provided with corresponding attachment members (118, 120) adapted to enter into mutual engagement with each other upon complete insertion of at least part (101; 128) of the battery pack (100a, 100b) or of the adapter element (66; 80) into the recess (62) and to provide for a releasable attachment of the battery pack (100a, 100b) or the adapter element (66; 80) to the vacuum cleaner housing (4, 6; 32).

8. Electrically operated mobile vacuum cleaner (2) according to claim 7, wherein
the attachment members (118, 120) are adapted to automatically enter into mutual engagement with each other upon complete insertion of at least part (101; 128) of the battery pack (100a, 100b) or the adapter element (66; 80) into the recess (62).

9. Electrically operated mobile vacuum cleaner (2) according to one of the claims 3 to 8, wherein
the electric transformer (70; 92) in the adapter element (66) or in the external power supply unit (84) is adapted to comply with the ATEX 95 equipment directive 94/9/EC.

10. Electrically operated mobile vacuum cleaner (2) according to one of the claims 3 to 9, wherein
the first electric cable (74; 82) is fixedly attached to the adapter element (66; 80).

11. Electrically operated mobile vacuum cleaner (2) according to one of the claims 3 to 10, wherein
the external power supply unit (84) comprises a first electric socket (138) for releasable attachment of the first cable (82) to the power supply unit (84), or
the external power supply unit (84) comprises a second electric socket (140) for releasable attachment of the second cable (86) to the power supply unit (84).

12. Electrically operated mobile vacuum cleaner (2) according to one of the preceding claims, wherein
the at least one battery cell (116) is a Li-polymer battery cell, and wherein the at least one battery cell (116) is arranged and switched in the battery pack (100a, 100b) such that the battery pack (100a, 100b) provides an output voltage of one of 12 V, 18 V, 24 V, 36 V, 48 V and an output current of 10 A to 15 A DC.

13. Electrically operated mobile vacuum cleaner (2) according to one of the preceding claims, wherein
the wheels (20) are directly attached to the vacuum cleaner housing (4, 6) or
the vacuum cleaner (2) is mounted on a trolley which is provided with wheels (20) on which the trolley can be easily moved over the ground together with the vacuum cleaner (2) mounted thereon.

14. Electrically operated mobile vacuum cleaner (2) according to one of the preceding claims, wherein
the recess (62) has a dimension and form in order to receive at least a front part (101; 128) of the battery pack (100a, 100b) or the adapter housing (126) of the adapter element (66; 80), the front part (101; 128) comprising a front end face (122; 132) and circumferential wall portions (124; 134) of the battery pack (100a, 100b) or the adapter housing (126), the circumferential wall portions (124; 134) bordering and surrounding the front end face (122; 132), or
the recess (62) has a dimension and form in order to receive the entire battery pack (100a, 100b) or adapter housing (126) of the adapter element (66; 80), leaving only a rear end face (106, 112) of the battery pack (100a, 100b) or the adapter housing (126) visible from outside.

## Patentansprüche

1. Elektrisch betriebener mobiler Staubsauger (2) zum Abscheiden von Staub und Partikeln aus einem Saugstrom (35), wobei der Staubsauger (2) umfasst
einen Elektromotor (38) und eine Turbine (40) zur Erzeugung des Saugstroms (35),
ein Staubsaugergehäuse (4, 6; 32), in dem der Elektromotor (38) und eine Sammelkammer (8) zum Sammeln des aus dem Saugstrom (35) abgeschiedenen Staubs und der Partikel angeordnet sind,
mindestens eine Batteriezelle (116) zur Versorgung des Elektromotors (38) mit elektrischer Energie für seinen Betrieb,
mehrere dem Staubsauger (2) zugeordnete Räder (20), auf denen der Staubsauger (2) über eine Bodenfläche bewegt werden kann,
wobei die mindestens eine Batteriezelle (116) einen integralen Bestandteil eines entnehmbaren Batteriepacks (100a, 100b) bildet,
das Staubsaugergehäuse (4, 6; 32) eine Ausnehmung (62) mit einer Längserstreckung (136) aufweist, wobei die Ausnehmung (62) sich zu einer Umgebung hin öffnet und ausgebildet ist, zumindest einen Teil (101) des Batteriepacks (100a, 100b) in einer Richtung (104) parallel zu der Längserstreckung (136) aufzunehmen,
der Batteriepack (100a, 100b) mit mindestens zwei getrennten ersten elektrischen Kontaktelementen (60; 60') ausgestattet ist, die elektrisch mit der mindestens einen Batteriezelle (116) verbunden sind, und
die Ausnehmung (62) mit mindestens zwei getrennten zweiten elektrischen Kontaktelementen (64; 64') ausgestattet ist, die elektrisch mit dem Elektromotor (38) verbunden sind,
die ersten und zweiten Kontaktelemente (60, 64; 60, 64') ausgebildet sind, automatisch in einen gegenseitigen elektrischen Kontakt zu treten, wenn zumindest ein Teil (101) des Batteriepacks (100a, 100b) in die Ausnehmung (62) eingesetzt ist, um eine elektrische Verbindung zwischen der mindestens einen Batteriezelle (116) und dem Elektromotor (38) herzustellen und den Staubsauger (2) mittels elektrischer Energie von der mindestens einen Batteriezelle (116) zu betreiben, und
das Staubsaugergehäuse (4, 6; 32) einen oberen Teil (4) mit mindestens dem Elektromotor (38) und der Turbine (40) und einen unteren Teil (6) mit der Staubsammelkammer (8) aufweist,
**dadurch gekennzeichnet, dass**
die Ausnehmung (62) in einem Gehäuse (32) des oberen Teils (4) des Staubsaugergehäuses vorgesehen ist und der obere Teil (4) lösbar an dem unteren Teil (6) befestigt ist.

2. Elektrisch betriebener mobiler Staubsauger (2) nach Anspruch 1, wobei
der Staubsauger (2) ein Adapterelement (66; 80) umfasst, das ein Adaptergehäuse (126) aufweist, von dem zumindest ein Teil (128) so ausgebildet ist, dass es nach Entnahme des Batteriepacks (100a, 100b) in die Ausnehmung (62) einsetzbar ist,
wobei das Adaptergehäuse (126) mit mindestens zwei getrennten dritten elektrischen Kontaktelementen (63; 63') ausgestattet ist, die elektrisch mit einem Kabel (74; 82) und einem Stecker (78; 88) verbunden sind, die für den Anschluss an ein Stromnetz geeignet sind,
wobei die dritten und die zweiten Kontaktelemente (63, 64; 63', 64') ausgebildet sind, beim Einsetzen zumindest eines Teils (128) des Adaptergehäuses (126) in die Ausnehmung (62) automatisch in einen gegenseitigen elektrischen Kontakt treten, um eine elektrische Verbindung zwischen dem Stromnetz und dem Elektromotor (38) herzustellen und den Staubsauger (2) mittels elektrischer Energie aus dem Stromnetz zu betreiben, wenn der Stecker (78; 88) mit dem Stromnetz verbunden ist.

3. Elektrisch betriebener mobiler Staubsauger (2) nach Anspruch 2, wobei
das Adapterelement (80) über ein erstes elektrisches Kabel (82) mit einer externen Stromversorgungseinheit (84) verbunden ist und die Stromversorgungseinheit (84) über ein zweites elektrisches Kabel (86) mit dem Stecker (88) verbunden ist,
wobei die Stromversorgungseinheit (84) einen elektrischen Transformator (92) umfasst, um die elektrische Energie aus dem Stromnetz in elektrische Energie umzuwandeln, die der von dem Batteriepack (100a, 100b) gelieferten elektrischen Energie entspricht, um den Betrieb des Staubsaugers (2) mittels elektrischer Energie zu ermöglichen, die aus dem Stromnetz stammt und durch den elektrischen Transformator (92) der Stromversorgungseinheit (84) umgewandelt wird.

4. Elektrisch betriebener mobiler Staubsauger (2) nach Anspruch 2, wobei
das Adapterelement (66) einen elektrischen Transformator (70) umfasst, der im Inneren des Adaptergehäuses (126) angeordnet ist,
der elektrische Transformator (70) ausgebildet ist, die elektrische Energie aus dem Stromnetz in elektrische Energie umzuwandeln, die der von dem Batteriepack (100a, 100b) gelieferten elektrischen Energie entspricht, um den Betrieb des Staubsaugers (2) mittels elektrischer Energie zu ermöglichen, die aus dem Stromnetz stammt und durch den elektrischen Transformator (70) des Adapterelements (66) umgewandelt wird.

5. Elektrisch betriebener mobiler Staubsauger (2) nach Anspruch 3 oder 4, wobei
der elektrische Transformator (70; 92) geeignet ist, eine Spannung von 230 V oder 110 V AC des Stromnetzes, die mit 50 Hz bis 60 Hz wechselt, in eine Betriebsspannung von 12 V, 18 V, 24 V, 36 V bzw. 48 V DC für den Staubsauger (2) zu transformieren.

6. Elektrisch betriebener mobiler Staubsauger (2) nach einem der Ansprüche 2 bis 5, wobei
die Stromversorgungseinheit (84) und/oder das Adapterelement (66) einen Gleichrichter (72; 94) zur Umwandlung eines Wechselstroms des Stromnetzes in einen Gleichstrom für den Staubsauger (2) umfassen, und/oder
die Stromversorgungseinheit (84) und/oder das Adapterelement (66) ein elektronisches Filterelement (72; 94) zur Reduzierung von Interferenzen und zur Unterdrückung elektronischer Störungen in der Betriebsspannung des Staubsaugers (2) umfassen.

7. Elektrisch betriebener mobiler Staubsauger (2) nach einem der vorhergehenden Ansprüche, wobei
das Staubsaugergehäuse (4, 6; 32) einerseits und der Batteriepack (100a, 100b) oder das Adaptergehäuse (126) des Adapterelements (66; 80) andererseits mit entsprechenden Befestigungselementen (118, 120) versehen sind, die ausgebildet sind, nach einem vollständigen Einsetzen mindestens eines Teils (101; 128) des Batteriepacks (100a, 100b) oder des Adapterelements (66; 80) in die Ausnehmung (62) in gegenseitigen Eingriff zu treten und für eine lösbare Befestigung des Batteriepacks (100a, 100b) oder des Adapterelements (66; 80) an dem Staubsaugergehäuse (4, 6; 32) zu sorgen.

8. Elektrisch betriebener mobiler Staubsauger (2) nach Anspruch 7, wobei
die Befestigungselemente (118, 120) ausgebildet sind, nach dem vollständigen Einsetzen mindestens eines Teils (101; 128) des Batteriepacks (100a, 100b) oder des Adapterelements (66; 80) in die Ausnehmung (62) automatisch in gegenseitigen Eingriff miteinander zu treten.

9. Elektrisch betriebener mobiler Staubsauger (2) nach einem der Ansprüche 3 bis 8, wobei
der elektrische Transformator (70; 92) in dem Adapterelement (66) oder in der externen Stromversorgungseinheit (84) ausgebildet ist, der ATEX 95-Geräterichtlinie 94/9/EG zu entsprechen.

10. Elektrisch betriebener mobiler Staubsauger (2) nach einem der Ansprüche 3 bis 9, wobei
das erste elektrische Kabel (74; 82) fest mit dem Adapterelement (66; 80) verbunden ist.

11. Elektrisch betriebener mobiler Staubsauger (2) nach einem der Ansprüche 3 bis 10, wobei
die externe Stromversorgungseinheit (84) eine erste elektrische Buchse (138) zur lösbaren Befestigung des ersten Kabels (82) an der Stromversorgungseinheit (84) aufweist, oder
die externe Stromversorgungseinheit (84) eine zweite elektrische Buchse (140) zur lösbaren Befestigung des zweiten Kabels (86) an der Stromversorgungseinheit (84) aufweist.

12. Elektrisch betriebener mobiler Staubsauger (2) nach einem der vorhergehenden Ansprüche, wobei
die mindestens eine Batteriezelle (116) eine Li-Polymer-Batteriezelle ist, und wobei die mindestens eine Batteriezelle (116) in dem Batteriepack (100a, 100b) so angeordnet und geschaltet ist, dass der Batteriepack (100a, 100b) eine Ausgangsspannung von 12 V, 18 V, 24 V, 36 V, 48 V und einen Ausgangsstrom von 10 A bis 15 A DC liefert.

13. Elektrisch betriebener mobiler Staubsauger (2) nach einem der vorhergehenden Ansprüche, wobei
die Räder (20) direkt an dem Staubsaugergehäuse (4, 6) befestigt sind oder
der Staubsauger (2) auf einem Rollwagen montiert ist, der mit Rädern (20) versehen ist, auf denen der Rollwagen zusammen mit dem darauf montierten Staubsauger (2) leicht über den Boden bewegt werden kann.

14. Elektrisch betriebener mobiler Staubsauger (2) nach einem der vorhergehenden Ansprüche, wobei
die Ausnehmung (62) eine Abmessung und Form aufweist, um zumindest einen vorderen Teil (101; 128) des Batteriepacks (100a, 100b) oder des Adaptergehäuses (126) des Adapterelements (66; 80) aufzunehmen, wobei der vordere Teil (101; 128) eine vordere Stirnfläche (122; 132) und umlaufende Wandabschnitte (124; 134) des Batteriepacks (100a, 100b) oder des Adaptergehäuses (126) umfasst, wobei die umlaufenden Wandabschnitte (124; 134) die vordere Stirnfläche (122; 132) begrenzen und umgeben, oder
die Ausnehmung (62) eine Abmessung und Form aufweist, um den gesamten Batteriepack (100a, 100b) oder das gesamte Adaptergehäuse (126) des Adapterelements (66; 80) aufzunehmen, wobei nur eine hintere Stirnfläche (106, 112) des Batteriepacks (100a, 100b) oder des Adaptergehäuses (126) von außen sichtbar ist.

## Revendications

1. Aspirateur mobile électrique (2) pour séparer la poussière et les particules d'un flux d'aspiration (35), l'aspirateur (2) comprenant
un moteur électrique (38) et une turbine (40) pour générer le flux d'aspiration (35),
un boîtier d'aspirateur (4, 6 ; 32) dans lequel sont disposés le moteur électrique (38) et une chambre de collecte (8) pour collecter la poussière et les particules séparées du flux d'aspiration (35),
au moins un élément de batterie (116) destiné à fournir au moteur électrique (38) l'énergie électrique nécessaire à son fonctionnement,
une pluralité de roues (20) affectées à l'aspirateur (2), sur lesquelles l'aspirateur (2) peut être déplacé sur une surface au sol,
dans lequel l'au moins un élément de batterie (116) fait partie intégrante d'un bloc-batterie extractible (100a, 100b),
le boîtier de l'aspirateur (4, 6 ; 32) comprend un renfoncement (62) avec une extension longitudinale (136), le renfoncement (62) s'ouvrant vers l'environnement et adaptée pour recevoir au moins une partie (101) du bloc-batterie (1 00a, 100b) dans une direction (104) parallèle à l'extension longitudinale (136),
le bloc-batterie (100a, 100b) est équipé d'au moins deux premiers éléments de contact électrique distincts (60 ; 60') connectés électriquement à l'au moins un élément de batterie (116), et
le renfoncement (62) est équipé d'au moins deux éléments de second contact électrique distincts (64 ; 64') connectés électriquement au moteur électrique (38),
les premier et second éléments de contact (60, 64 ; 60, 64') sont adaptés pour entrer automatiquement en contact électrique mutuel lors de l'insertion d'au moins une partie (101) de le bloc-batterie (100a, 100b) dans le renfoncement (62) afin d'établir une connexion électrique entre l'au moins un élément de batterie (116) et le moteur électrique (38) et de faire fonctionner l'aspirateur (2) au moyen de l'énergie électrique provenant d'au moins un élément de batterie (116), et
le boîtier de l'aspirateur (4, 6 ; 32) comprend une partie supérieure (4) comprenant au moins le moteur électrique (38) et la turbine (40) et une partie inférieure (6) comprenant la chambre de collecte des poussières (8),
**caractérisé en ce que**
le renfoncement (62) est prévu dans un logement (32) de la partie supérieure (4) du boîtier de l'aspirateur, et la partie supérieure (4) est fixée de manière amovible à la partie inférieure (6).

2. Aspirateur mobile électrique (2) selon la revendication 1, dans lequel
l'aspirateur (2) comprend un élément adaptateur (66 ; 80) doté d'un boîtier adaptateur (126) dont au moins une partie (128) est conçue de manière à pouvoir être insérée dans le renfoncement (62) après le retrait du bloc-batterie (100a, 100b),
le boîtier adaptateur (126) est équipé d'au moins deux troisièmes éléments de contact électrique distincts (63 ; 63') reliés électriquement à un câble (74 ; 82) et à une fiche (78 ; 88) adaptés à la connexion à une alimentation électrique de secteur,
dans lequel les troisième et deuxième éléments de contact (63, 64 ; 63', 64') sont adaptés pour entrer automatiquement en contact électrique mutuel lors de l'insertion d'au moins une partie (128) du boîtier adaptateur (126) dans le renfoncement (62) afin d'établir une connexion électrique entre l'alimentation électrique de secteur et le moteur électrique (38) et le fonctionnement de l'aspirateur (2) au moyen de l'énergie électrique provenant de l'alimentation électrique de secteur, si la fiche (78 ; 88) est connectée à l'alimentation électrique de secteur.

3. Aspirateur mobile électrique (2) selon la revendication 2, dans lequel
l'élément adaptateur (80) est relié à un bloc d'alimentation externe (84) au moyen d'un premier câble électrique (82) et le bloc d'alimentation (84) est relié à la fiche (88) au moyen d'un second câble électrique (86),
dans lequel le bloc d'alimentation (84) comprend un transformateur électrique (92) pour transformer l'énergie électrique provenant de l'alimentation électrique de secteur en énergie électrique correspondant à l'énergie électrique fournie par le bloc-batterie (100a, 100b), afin de permettre le fonctionnement de l'aspirateur (2) au moyen de l'énergie électrique provenant de l'alimentation électrique de secteur et transformée par le transformateur électrique (92) du bloc d'alimentation (84).

4. Aspirateur mobile électrique (2) selon la revendication 2, dans lequel
l'élément adaptateur (66) comprend un transformateur électrique (70) disposé à l'intérieur du boîtier adaptateur (126),
le transformateur électrique (70) est adapté pour transformer l'énergie électrique provenant de l'alimentation électrique de secteur en énergie électrique correspondant à l'énergie électrique fournie par le bloc-batterie (100a, 100b), afin de permettre le fonctionnement de l'aspirateur (2) au moyen de l'énergie électrique provenant de l'alimentation électrique de secteur et transformée par le transformateur électrique (70) de l'élément adaptateur (66).

5. Aspirateur mobile électrique (2) selon la revendication 3 ou 4, dans lequel
le transformateur électrique (70 ; 92) est adapté pour transformer une tension de 230 V ou 110 V CA de l'alimentation électrique de secteur alternant à 50 Hz à 60 Hz en une tension de fonctionnement de 12 V, 18 V, 24 V, 36 V ou 48 V CC, respectivement, pour l'aspirateur (2).

6. Aspirateur mobile électrique (2) selon l'une des revendications 2 à 5, dans lequel
le bloc d'alimentation (84) et/ou l'élément adaptateur (66) comprennent un redresseur (72 ; 94) pour transformer un courant alternatif de l'alimentation électrique de secteur en un courant continu pour l'aspirateur (2), et/ou
le bloc d'alimentation (84) et/ou l'élément adaptateur (66) comprennent un élément filtre électronique (72 ; 94) pour réduire les interférences et supprimer les perturbations électroniques dans la tension de fonctionnement de l'aspirateur (2).

7. Aspirateur mobile électrique (2) selon l'une des revendications précédentes, dans lequel
le boîtier de l'aspirateur (4, 6 ; 32) d'une part et le bloc-batterie (100a, 100b) ou le boîtier adaptateur (126) de l'élément adaptateur (66 ; 80) d'autre part sont pourvus d'éléments de fixation correspondants (118, 120) conçus pour s'engager mutuellement lors de l'insertion complète d'au moins une partie (101 ; 128) du bloc-batterie (100a, 100b) ou de l'élément adaptateur (66 ; 80) dans le renfoncement (62) et pour permettre une fixation amovible du bloc-batterie (100a, 100b) ou de l'élément adaptateur (66 ; 80) au boîtier de l'aspirateur (4, 6 ; 32).

8. Aspirateur mobile électrique (2) selon la revendication 7, dans lequel
les éléments de fixation (118, 120) sont conçus pour s'engager automatiquement l'un dans l'autre lors de l'insertion complète d'au moins une partie (101 ; 128) du bloc-batterie (100a, 100b) ou de l'élément adaptateur (66 ; 80) dans le renfoncement (62).

9. Aspirateur mobile électrique (2) selon l'une des revendications 3 à 8, dans lequel
le transformateur électrique (70 ; 92) dans l'élément adaptateur (66) ou dans le bloc d'alimentation (84) est adapté pour se conformer à la directive sur les équipements ATEX 95 94/9/CE.

10. Aspirateur mobile électrique (2) selon l'une des revendications 3 à 9, dans lequel
le premier câble électrique (74 ; 82) est fixé à l'élément adaptateur (66 ; 80).

11. Aspirateur mobile électrique (2) selon l'une des revendications 3 à 10, dans lequel
le bloc d'alimentation externe (84) comprend une première prise électrique (138) pour la fixation amovible du premier câble (82) au bloc d'alimentation (84), ou
le bloc d'alimentation externe (84) comprend une deuxième prise électrique (140) pour la fixation amovible du deuxième câble (86) au bloc d'alimentation (84).

12. Aspirateur mobile électrique (2) selon l'une des revendications précédentes, dans lequel
l'au moins un élément de batterie (116) est un élément de batterie Lipolymère, et dans lequel l'au moins un élément de batterie (116) est disposé et commuté dans le bloc-batterie (100a, 100b) de sorte que le bloc-batterie (100a, 100b) fournisse une tension de sortie parmi 12 V, 18 V, 24 V, 36 V, 48 V et un courant de sortie de 10 A à 15 A DC.

13. Aspirateur mobile électrique (2) selon l'une des revendications précédentes, dans lequel
les roues (20) sont directement fixées au boîtier d'aspirateur (4, 6) ou
l'aspirateur (2) est monté sur un chariot muni de roues (20) sur lesquelles le chariot peut être facilement déplacé sur le sol avec l'aspirateur (2) monté dessus.

14. Aspirateur mobile électrique (2) selon l'une des revendications précédentes, dans lequel
le renfoncement (62) a une dimension et une forme permettant de recevoir au moins une partie avant (101 ; 128) du bloc-batterie (100a, 100b) ou du boîtier adaptateur (126) de l'élément adaptateur (66 ; 80), la partie avant (101 ; 128) comprenant une face frontale (122 ; 132) et des parties de parois circonférentielles (124 ; 134) du bloc-batterie (100a, 100b) ou du boîtier adaptateur (126), les parties de parois circonférentielles (124 ; 134) bordant et entourant la face frontale (122 ; 132), ou
le renfoncement (62) a une dimension et une forme permettant de recevoir la totalité du bloc-batterie (100a, 100b) ou du boîtier adaptateur (126) de l'élément adaptateur (66 ; 80), en ne laissant visible de l'extérieur qu'une face arrière (106, 112) du bloc-batterie (100a, 100b) ou du boîtier adaptateur (126).
